# EUROPÄISCHE PATENTANMELDUNG

(11) **EP 1 559 673 A2**
(43) Veröffentlichungstag der Anmeldung: **03.08.2005**
(21) Anmeldenummer: 04030961.9
(22) Anmeldetag: 29.12.2004
(51) Int. Cl.: B66F 9/075

(54) **Verriegelungsvorrichtung für den Batteriewagen eines Schubmaststaplers**

(30) Priorität: 28.01.2004 DE 102004004156
(71) Anmelder: Jungheinrich Aktiengesellschaft, 22047 Hamburg (DE)
(72) Erfinder: Krull, Hans-Friedrich, 25451 Quickborn (DE); Allerding, Uwe, 21409 Embsen (DE)
(74) Vertreter: Graalfs, Edo, Dipl.-Ing.

(57) **Zusammenfassung**

Verriegelungsvorrichtung für den Batteriewagen (40) eines Schubmaststaplers (10), mit einem Verriegelungselement, das mit einer Verriegelungsausnehmung des Batteriewagens (40) so zusammenwirkt, dass der Batteriewagen (40) mit einem Hubgerüst (12) des Schubmaststaplers (10) mitbewegt wird, wenn das Verriegelungselement (38) mit der Verriegelungsausnehmung (78) außer Eingriff ist, wobei das Verriegelungselement (38) von einer Feder (62) zur Verriegelungsausnehmung hin vorgespannt ist, und einer Betätigungsvorrichtung (30) für das Verriegelungselement (38), wodurch die Verriegelungsvorrichtung einen zweiarmigen Pedalhebel (30) aufweist, der um eine horizontale Achse (34) schwenkbar an einer Batterietrennwand (18) gelagert und über den größten Teil seiner Länge in einem Spalt zwischen der Batterietrennwand (18) und einer Haube (24) angeordnet ist, auf der der Fahrersitz angeordnet ist, ein Betätigungsabschnitt des Pedalhebels (30) im Bereich vor dem Sitz des Schubmaststaplers (10) so angeordnet ist, dass er mit dem Fuß des Fahrers betätigbar ist und das andere Ende des Pedalhebels (30) über eine Zugstange (36) mit dem Verriegelungselement (38) verbunden ist.

## Beschreibung

Die Erfindung bezieht sich auf eine Verriegelungsvorrichtung für den Batteriewagen eines Schubmaststaplers nach dem Oberbegriff des Patentanspruchs 1.

Bekanntlich wird bei einem Schubmaststapler das Hubgerüst relativ zum Antriebsteil, das auch eine Kabine für den Fahrer enthält, verstellbar ausgeführt. Die Batterie für einen Schubmaststapler befindet sich üblicherweise in einem Raum zwischen der Fahrerkabine und dem Hubgerüst. Der Fahrer sitzt quer zur Längsachse des Fahrzeugs, wobei eine Armablage oberhalb des Batteriefaches angeordnet ist. Die Batterie wird horizontal aus dem Batteriegehäuse herausgeschoben. Zum Batteriewechsel und auch bei einem Wartungsvorgang muß ein ausreichender Zugang zum Batteriefach geschaffen werden. Daher ist das Batteriefach beim Schubmaststapler als Wagen ausgeführt, der vom Hubgerüst mitgenommen wird wenn sich vom Antriebsteil fortbewegt wird.

Es ist bereits bekannt, einen derartigen Batteriewagen mit dem Hubgerüst zu koppeln und zu Wartungs- und Batteriewechselzwecken in eine geeignete Position zu verfahren. Im Normalbetrieb muß jedoch verhindert werden, dass beim Verschieben des Hubgerüstes der Batteriewagen mit verschoben wird. Der Batteriewagen wird daher in geeigneter Weise am Antriebsteil verriegelt. Erst wenn der Fahrer die Verriegelung aufhebt, kann der Batteriewagen zusammen mit dem Hubgerüst verschoben werden.

Es ist bekannt, eine Entriegelung des Batteriewagens mit einem handbetätigten Bowdenzug vorzunehmen. Es besteht jedoch die Gefahr, dass der Bowdenzug reißt und dann aufwendig ausgetauscht werden muss. Beim Einsatz des Hubmaststaplers im Kühlraum kann der Bowdenzug durch Kondenswasser festfrieren und ist dann nicht mehr betätigbar. Zur Entlastung des Verriegelungsbolzens ist es üblich, den Batteriewagen geringfügig zurückzuschieben, wofür der Fahrer beide Hände benötigt. Er hat dann keine Hand mehr frei für die Betätigung des Bowdenzugs.

Falls bei einem Schubmaststapler bei Stromausfall oder einem Riss des Bowdenzugs eine Entriegelung nicht mehr stattfinden kann, muss unter Umständen der gesamte Fahrantrieb ausgebaut werden. Um dies zu verhindern, ist eine Notentriegelung erforderlich. Außerdem kann geschehen, dass der Bowdenzug wegen beengter Platzverhältnisse beim Zurückschieben der Batterie eingeklemmt wird.

Der Erfindung liegt die Aufgabe zugrunde, eine Verriegelungsvorrichtung für den Batteriewagen eines Schubmaststaplers zu schaffen, die robust ist, wenig Bauteile erfordert und bedienungsfreundlich ist. Außerdem soll sie eine Notentriegelung überflüssig machen.

Diese Aufgabe wird durch die Merkmale des Patentanspruchs 1 gelöst.

Bei der erfindungsgemäßen Verriegelungsvorrichtung ist ein Pedal vorgesehen, dass im Bereich vor dem Sitz des Schubmaststaplers so angeordnet ist, dass es mit dem Fuß des Fahrers betätigbar ist. Das Pedal ist wirkungsmäßig mit dem Verriegelungselement verbunden.

Vorzugsweise sitzt das Pedal in der Ecke zwischen der Vorderseite einer Haube für den Fahrersitz und der Trennwand zum Batterieraum bzw. Batteriewagen, so dass das Pedal auf einfache Weise mit dem Fuß, vorzugsweise mit der Hacke des Fahrers betätigt werden kann, wenn dieser auf seinem Sitz sitzt.

Üblicherweise ist das Verriegelungselement durch eine Feder in die Verriegelungsstellung vorgespannt. Eine Fußbetätigung erlaubt eine einfache Betätigung des Verriegelungselement, auch wenn eine relativ starke Vorspannfeder verwendet wird. Über ein Gestänge kann wirksam eine große Kraft auf das Verriegelungselement aufgebracht werden. Ein Festfrieren des Gestänges, beispielsweise beim Einsatz des Fahrzeugs in Kühlräumen, ist ausgeschlossen oder kann durch die Fußkraft ohne weiteres überwunden werden. Ein Gestänge kann relativ stabil ausgeführt werden, so dass auch bei vielfacher Betätigung ein Ausfall nicht befürchtet werden muss. Eine Notentriegelung kann daher entfallen.

Trotz der wirksamen Betätigung des Verriegelungelements ist die konstruktive Verwirklichung der Erfindung denkbar einfach.

Nach einer Ausgestaltung der Erfindung ist vorgesehen, dass ein zweiarmiger Pedalhebel um eine horizontale Achse schwenkbar an einer Batterietrennwand gelagert und über den größten Teil seiner Länge in einem Spalt zwischen der Batterietrennwand und einer Haube angeordnet ist, auf der der Fahrer sitzt. Zwischen Batterietrennwand und Haube ist ausreichend Platz vorhanden für die Anordnung eines Pedalhebels. Der Spalt zwischen Haubenwand und Batterietrennwand wird zum Fußraum hin zumeist durch eine Gummileiste abgedichtet. Die Gummileiste kann an Ort und Stelle verbleiben und braucht nicht geändert oder teilweise entfernt werden.

Nach einer weiteren Ausgestaltung der Erfindung weist das Pedal ein vorderes Betätigungsende und ein hinteres Ende auf. Das hintere Ende ist mit dem oberen Ende einer Zugstange verbunden, und zwar über einen seitlichen Ansatz des Pedalhebels. Mit dem unteren Ende ist die Zugstange mit dem Verriegelungselement verbunden, vorzugsweise einem Verriegelungsbolzen, der z. B. vertikal beweglich gelagert ist. Die Zugstange kann nach einer weiteren Ausgestaltung der Erfindung an dem dem Pedal zugewandten Ende einen Gewindeabschnitt aufweisen, der sich durch ein Loch des Ansatzes hindurch erstreckt und auf dem eine Mutter sitzt zur Veränderung der Lage der Stange im Loch. Bei einem möglichen Festsitzen des Verriegelungsbolzens durch Klemmen oder Korrosion ist es möglich, die Zugstange zwangsweise nach unten zu bewegen, sollte die Kraft der Feder nicht ausreichen, den Verriegelungsbolzen in die Verriegelungsstellung zurückzubringen.

Nach einer weiteren Ausgestaltung der Erfindung ist vorgesehen, dass die Zugstange über ein Winkelgelenk mit einem Halteelement verbunden ist, das mit dem zugekehrten Ende des Verriegelungsbolzens verbunden ist. So kann z. B. eine Halteplatte in einem Schlitz des Verriegelungsbolzens angebracht werden, beispielsweise durch Verschweißung. Die Halteplatte weist ein Loch auf zur Aufnahme eines mit dem Winkelelement verbundenen Stiftes. Das Winkelelement hat den Vorteil, dass es Toleranzen und den Schwenkradius des Pedalhebels ausgleicht.

Die Erfindung wird nachfolgend anhand eines in Zeichnungen dargestellten Ausführungsbeispieles näher erläutert.
- Fig. 1: zeigt die Hinteransicht eines Schubmaststaplers mit einer Verriegelungsvorrichtung nach der Erfindung.
- Fig. 2: zeigt die Draufsicht auf einen Batteriewagen des Schubmaststaplers nach Fig. 1, an den ein Verriegelungshebel gelagert ist.
- Fig. 3: zeigt perspektivisch einen Teil der Fahrerkabine des Schubmaststaplers nach Fig. 1.
- Fig. 4: zeigt den Aufbau der Verriegelungsvorrichtung nach der Erfindung.

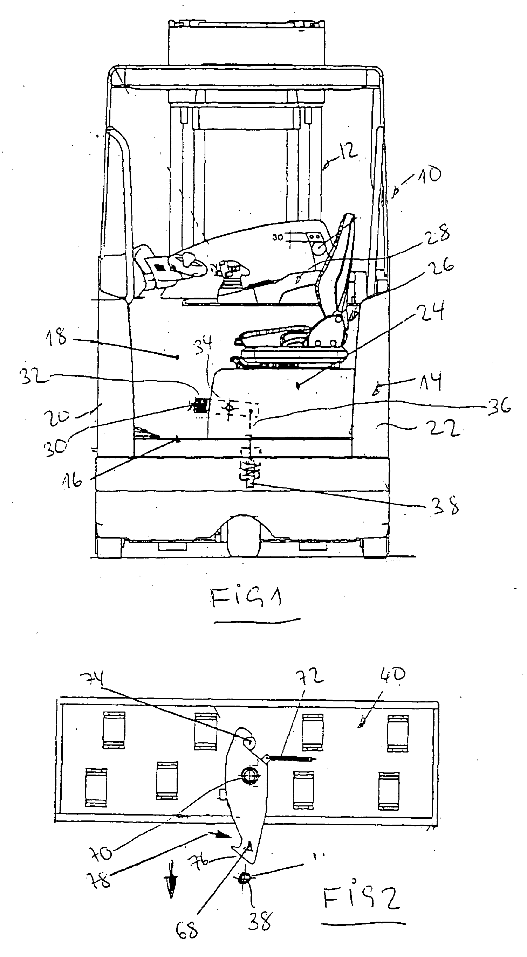

In Fig. 1 ist ein Schubmaststapler 10 dargestellt mit einem verfahrbaren Hubgerüst 12 und einer Fahrerkabine 14. Die untere Begrenzung der Fahrerkabine erfolgt über ein Fußblech 16. Zum Hubgerüst hin ist sie durch eine Batterietrennwand 18 begrenzt. Zu den Seiten hin erfolgt die Begrenzung über Rahmenwände 20 bzw. 22. Nach hinten hin ist die Kabine für den Einstieg offen. In der Kabine ist eine Sitzhaube 24 angeordnet, auf der ein Sitz 26 angebracht ist. Auf der rechten Seite des Sitzes 26 ist eine Armauflage 28 angeordnet. Auf die Bedienelemente des Schubmaststaplers 10 soll im einzelnen nicht eingegangen werden, weil sie für die nachstehende Beschreibung nicht von Bedeutung sind.

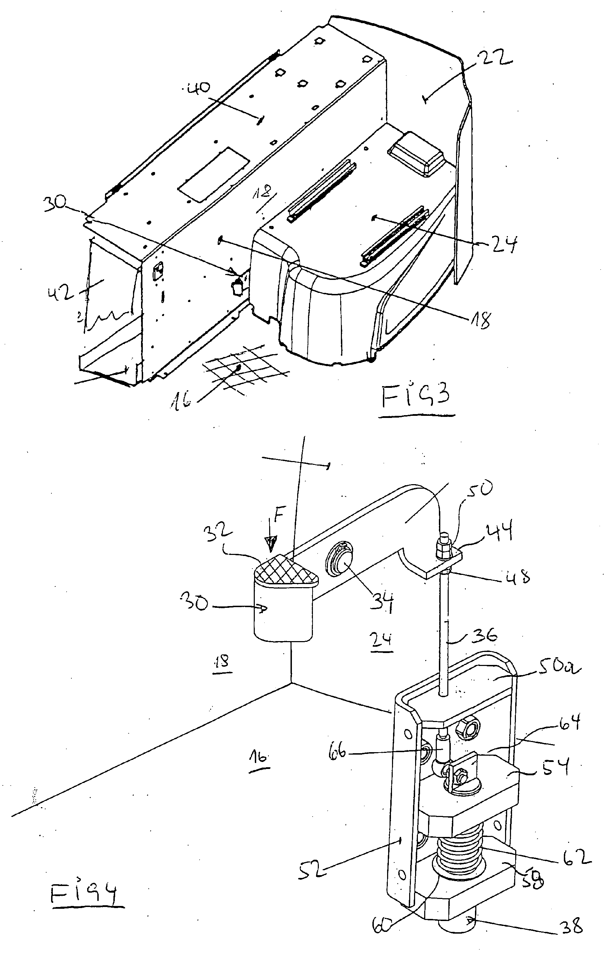

In Fig. 1 und 3 ist zu erkennen, dass ein Pedalhebel 30 zwischen Sitzhaube 24 und Batterietrennwand 18 angeordnet ist, wobei lediglich der Betätigungsabschnitt 32 über die Sitzhaube 24 nach vom in den Fußraum vorragt. Der Hebel 30 ist dabei relativ nahe dem Fußblech 16 angeordnet. Durch Aufsetzen des Fußes bzw. der Hacke eines Fußes des rechten Fahrerbeins kann daher der Hebel entgegengesetzt der Uhrzeigerrichtung verdreht werden. Die Lagerung des Hebels erfolgt über einen Stift 34 an der Batterietrennwand 18. Der andere Arm des Hebels 30 ist, wie in Fig. 1 gestrichelt gezeichnet, mit einer Zugstange 36 verbunden, die ihrerseits mit einem Verriegelungsbolzen 38 in Verbindung steht.

In Fig. 3 ist der Sitz entfernt und der Blick frei auf die Oberseite der Sitzhaube 24. Ferner ist auch die Armauflage 28 und die Rahmenwand 20 gemäß Fig. 1 entfernt. Man erkennt einen Batteriewagen 40, der eine Batterie 42 aufnimmt, die, wie an sich bekannt, zur Seite hin herausgenommen werden kann. Wie aus Fig. 3 jedoch ersichtlich, ist in der gezeigten Position eine Batterieentnahme und -wartung nicht möglich. Der Batteriewagen 40 befindet sich zwischen Trennwand 18 und Hubgerüst 12.

In Fig. 4 ist eine Verriegelungs- und Entriegelungsvorrichtung dargestellt, welche den bereits beschriebenen Pedalhebel 30 umfaßt. Er ist, wie aus den Fig. 1 und 3 hervorgeht, in dem Spalt zwischen der Batterietrennwand 18 und der zugeordneten Wand der Haube 24 angeordnet und über einen Lagerstift 34 an der Batterietrennwand 18 um eine horizontale Achse schwenkbar gelagert. Am hinteren Ende weist der Pedalhebel 30 einen seitlichen annähernd horizontalen Ansatz 44 auf mit einem Loch, durch welches hindurch die Zugstange 36 gesteckt ist. Die Zugstange weist ein Gewinde auf (nicht zu sehen), auf dem eine untere Mutter 48 und zwei obere Muttern 50 geschraubt sind. Die Zugstange erstreckt sich durch ein Loch in einer oberen Platte 50a, welche in einem U-förmigen Gehäuse 52 annähernd horizontal angebracht ist. Im Abstand zur Platte 50 sind weitere parallele Platten 54 bzw. 58 angebracht. Die Platten 54, 58 haben zueinander ausgerichtete Löcher, in denen der Verriegelungsbolzen 38 hindurcherstreckt ist. Der Verriegelungsbolzen weist einen Flansch 60 auf, gegen den eine Druckfeder 62 anliegt, die an der Unterseite der Platte 54 abgestützt ist. Der Verriegelungsbolzen 38 wird daher nach unten durch die Feder 62 vorgespannt. Am oberen Ende kurz oberhalb der Platte 54 weist der Verriegelungsbolzen 38 einen Schlitz auf, der eine kleine Halteplatte 64 aufnimmt. Sie ist darin etwa durch Schweißung befestigt. Die Zugstange 36 erstreckt sich durch ein Loch in der obersten Platte 50 nach unten und ist verbunden mit einem Winkelgelenk 66, dessen unterer Querstift mittels einer Mutter in einem Loch der Halteplatte 64 befestigt ist. Das Winkelgelenk ist z. B. nach DIN 71802 ausgeführt und erlaubt eine Drehung in vertikaler Richtung und ein Verschwenken in begrenztem Umfang in einem Raumwinkel für den mit der Halteplatte 64 verbundenen Stift. Es ist daher möglich, Toleranzen beim Zusammenbau der beschriebenen Teile auszugleichen. Außerdem führt die Verdrehung des Pedalhebels 30 zu einem gewissen Kippen der Zugstange 36, welche Bewegung ebenfalls kompensiert wird.

Das Gehäuse 52 ist unterhalb des Fußblechs 16 im unteren Raum des Schubmaststaplers 10 angeordnet, der auch die Aggregate zum Antrieb, für die Lenkung und für die Hydraulik des Schubmaststaplers 10 aufnimmt, was jedoch im einzelnen nicht dargestellt und auch nicht beschrieben werden soll.

In Fig. 2 ist der Querschnitt des Verriegelungsbolzens 38 dargestellt. Man erkennt außerdem den Batteriewagen 40 sowie einen doppelarmigen Hebel 68, der an der Oberseite des Batteriewagens 40 mittels eines vertikalen Lagerstiftes 70 drehbar gelagert ist. Er ist durch eine Feder 72 in Uhrzeigerrichtung vorgespannt. In der gezeigten Position greift das obere hakenförmige Ende um einen Bolzen 74, der mit dem nicht gezeigten Schlitten des Hubgerüstes 12 verbunden ist. In der gezeigten Position wird daher der Batteriewagen 40 mit dem Hubgerüst 12 mitbewegt. Wird der Batteriewagen jedoch gegenüber dem Verriegelungsbolzen 38 auf diesen zu verschoben, wird der Hebel 68 aufgrund der Schrägfläche 76 in Gegenuhrzeigerrichtung verschwenkt. Er gelangt dadurch außer Eingriff mit dem Bolzen 74 und mit dem unteren hakenförmigen Ende in Eingriff mit der Verriegelungsausnehmung 78 des Hebels 68, wodurch der Batteriewagen 40 am Antriebsteil des Schubmaststaplers 10 festgelegt ist und sich bei der Bewegung des Hubgerüstes 12 nicht mitbewegt. Wird der Verriegelungsbolzen 38 durch Betätigung mit dem Pedalhebel 30 nach oben gezogen, gelangt er außer Eingriff mit der Ausnehmung 78, so dass der Hebel automatisch in Eingriff mit dem Bolzen 74 gelangt.

Sollte der Verriegelungsbolzen 38 klemmen (durch Schmutz oder Eis) kann er durch Handbetätigung des Pedalhebel 30 auf und ab bewegt werden, wobei die untere Mutter 48 dafür sorgt, dass auf den Bolzen 38 ein Druck nach unten aufgebracht wird.

## Patentansprüche

1. Verriegelungsvorrichtung für den Batteriewagen eines Schubmaststaplers, mit einem Verriegelungselement, das mit einer Verriegelungsausnehmung des Batteriewagens so zusammenwirkt, dass der Batteriewagen mit einem Hubgerüst des Schubmaststaplers mitbewegt wird, wenn das Verriegelungselement mit der Verriegelungsausnehmung außer Eingriff ist, wobei das Verriegelungselement von einer Feder zur Verriegelungsausnehmung hin vorgespannt ist, und einer Betätigungsvorrichtung für das Verriegelungselement, **dadurch gekennzeichnet, dass** die Verriegelungsvorrichtung einen zweiarmigen Pedalhebel (30) aufweist, der um eine horizontale Achse schwenkbar an einer Batterietrennwand (18) gelagert und über den größten Teil seiner Länge in einem Spalt zwischen der Batterietrennwand (18) und einer Haube (24) angeordnet ist, auf der der Fahrersitz angeordnet ist, ein Betätigungsabschnitt (32) des Pedalhebels (30) im Bereich vor dem Sitz (26) des Schubmaststabes (10) so angeordnet ist, dass er mit dem Fuß des Fahrers betätigbar ist und das andere Ende des Pedalhebels (30) über eine Zugstange (36) mit dem Verriegelungselement verbunden ist.

2. Vorrichtung nach Anspruch 1, **dadurch gekennzeichnet, dass** das Pedal (30) ein hinteres Ende aufweist, das mit dem oberen Ende der Zugstange (36) über einen seitlichen Ansatz (44) verbunden ist, während das untere Ende der Zugstange mit einem Verriegelungsbolzen (38) verbunden ist.

3. Vorrichtung nach Anspruch 2, **dadurch gekennzeichnet, dass** die Zugstange (36) an dem dem Pedal zugekehrten Ende einen Gewindeabschnitt aufweist, der sich durch ein Loch des Ansatzes (44) erstreckt und auf dem Gewindeabschnitt eine Mutter (48, 50) angeordnet ist zur Veränderung der vertikalen Lage der Zugstange (36).

4. Vorrichtung nach einem der Ansprüche 1 bis 3, **dadurch gekennzeichnet, dass** die Zugstange (36) über ein Winkelgelenk (66) mit einem Halteelement (64) verbunden ist, dass mit dem zugekehrten Ende des Verriegelungsbolzens (38) verbunden ist.
